# EUROPEAN PATENT SPECIFICATION

(11) **EP 3 261 858 B1**
(45) Date of publication and mention of the grant of the patent: **25.12.2019**
(21) Application number: 16716680.0
(22) Date of filing: 22.02.2016
(51) Int. Cl.: B60C 13/00, B60C 13/02

(54) **TYRE FOR HEAVYLOAD VEHICLE WHEELS**
REIFEN FÜR SCHWERLASTFAHRZEUGRÄDER
PNEU POUR DES ROUES DE VÉHICULE POIDS LOURD

(30) Priority: 24.02.2015 IT MI20150277
(43) Date of publication of application: 03.01.2018
(73) Proprietor: Pirelli Tyre S.p.A., 20126 Milano (IT)
(72) Inventor: RAIA, Ciro, 20125 Milan (IT); MONTANARO, Fabio, 20125 Milan (IT)
(74) Representative: Brasca, Marco
(86) International application number: PCT/IB2016/050928
(87) International publication number: WO 2016/135606

(56) References cited:
- EP-A1- 0 726 173
- JP-A- H04 129 808
- JP-A- 2013 159 317

## Description

### Field of the finding

The present invention relates to a tyre provided with a sidewall wear indicator. Preferably, the present invention is applied to a tyre for heavy-load vehicle wheels and still more preferably to a tyre for wheels of buses or of heavy-load vehicles for mainly city use.

Generally, heavy-load vehicles, intended for passenger transport, or buses, particularly in a city environment, for allowing the passengers to enter and exit the vehicle with greater ease, must approach the sidewalk as close as possible.

In some countries, the law even provides that, for safety reasons, the driver brings the vehicle up to the sidewalk until the tyre sidewall is in contact therewith.

For the heavy-load vehicles, bringing the bed to a storage site is sometimes necessary in order to facilitate the loading and/or unloading of goods.

These manoeuvres generate repeated rubbing of the sidewalls of the tyres against the sidewalk, causing the wear of the sidewall itself. The sidewall is therefore subjected to wear via abrasion. This phenomenon is a feature of this particular use and is so considerable that it conditions the duration of the tread. It may in fact be necessary to dismount the tyres from the vehicle, in order to discard them or send them to be retreaded, when the tread is still not completely worn, since the sidewall is instead entirely worn and dangerously exposes the internal structure of the tyre. In addition to providing for a reinforcement layer of the sidewall which allows delaying the onset of the aforesaid drawbacks, it is important to monitor the state of integrity of the sidewall through suitable wear indicators.

### Prior art

The documents JP4-129806, WO2013/118657, EP726173, JP2013023016, JP09024710 refer to known wear indicators for the sidewall of tyres for heavy-load vehicle wheels. Document JP 2013 159317 A discloses a pneumatic tire including a recess which is formed in a sidewall part connecting a tread with a bead and indicates a wear condition of the sidewall part. An opening rim of the side wear indicator is formed in an elliptical shape which is concave inside the opening face in the tire radial direction.

### Summary of the invention

The Applicant has observed that, generally, the solutions of the prior art such as those described in the abovementioned documents provide for, as sidewall wear indicators, openings in the form of circumferential grooves or holes, arranged on the sidewall itself, shaped in a manner so as to allow measuring, e.g. with a depth gauge, the quantity of sidewall compound that is abraded with respect to the new tyre. Consequently, provision is made for measuring the quantity of sidewall compound that remains before reaching the minimum thickness, so that it is convenient and/or necessary to dismount the tread.

The Applicant has however observed that the presence of holes creates sudden discontinuities in the sidewall, in the area subjected to continuous deformations generated by the cyclic passage from the zone under impression, in which the sidewall is subjected to maximum bending, to the opposite zone, in which the sidewall is extended.

The abovementioned cyclic movement generates concentrated stresses, particularly in the zones of discontinuity of the thickness of the sidewall (i.e. at the hole-shaped wear indicators). This translates into cracks, due to the fatigue of the material, which in turn can undermine the structural integrity of the sidewall itself, reducing the use duration of the tyre.

The Applicant has also observed that in order to attempt to solve the problem of stresses concentrated at the sidewall wear indicators, some of the proposed solutions, in the abovementioned prior art documents, provide for increasing the size of the indicators themselves.

The Applicant has however observed that the wider the indicator, the more extended the sidewall portion unprotected by a suitable thickness of compound and at the same time the lower the thickness of compound available to absorb the cyclic stresses during running.

The Applicant has also observed that an excessive concentration of stresses, localised where the material volume is reduced, increases in the presence of large-size wear indicators, with the increase of the number thereof and can critically affect the zones adjacent to the edges of the wear indicator.

The Applicant has also noted that the zone of the sidewall placed in proximity to the maximum width of the tyre - at which it is particularly advantageous to make the indicator in order to quickly obtain, in the most evident possible manner, the sidewall wear indication - is also the zone more greatly subjected to continuous deformations.

In such zone, during the rolling of the tyre, the bending of the sidewall that is situated at the portion under impression is maximised and simultaneously also the extension of the sidewall in the opposed zone is maximised.

Such cyclic deformations are added to the deformations of discontinuous type set by the particular use type in city travel, characterised by continuous starts and stops, which subject the sidewall of the tyre to continuous torsional stresses induced by the braking or drive torque transmitted by the hub.

The Applicant has therefore set the problem of finding a sidewall wear indicator for heavy-load vehicle wheels and in particular for wheels of buses, minibuses or good-loading vehicles for city use which allows simply evaluating the wear to which a sidewall portion is subjected after a specific travel, eliminating or in any case considerably reducing the risk of onset of localised tensions adapted to generate cracks along the walls and/or on the bottom of the indicator itself.

The Applicant has also set the problem of finding a sidewall wear indicator for heavy-load vehicle wheels and in particular for wheels of buses, minibuses or good-loading vehicles for city use which does not have the drawbacks of the known indicators, in terms of localised tensions.

The Applicant has found that by making, in the sidewall, a wear indicator comprising an elongated shaped form, it is possible to simply and readily detect the wear of the sidewall of the tyre, still reducing the concentrations of the stresses generated by the sudden and localised variations of the thickness of the sidewall, in the zone of the wear indicator.

According to one aspect, the present invention regards a tyre for heavy-load vehicle wheels comprising a tread band and two sidewalls opposed with respect to the tread band; at least one of the sidewalls comprising a portion in which at least one sidewall wear indicator is obtained, in which said sidewall wear indicator comprises at least one lobe shape elongated in a first direction and having a reduced width portion in a direction substantially perpendicular to said first direction.

The elongated form allows distributing, over a wider sidewall zone, the stresses due to the bending and extending of the sidewall of the tread, in the cyclic passage from the impression area to the diametrically opposed zone. The reduced width portion of the form allows reducing the combined tensional state due to the combined bending/extending and twisting stresses to which the sidewall and the wear indicator are subjected during the rolling and the braking and acceleration manoeuvres.

In such a manner, the concentrations of the stresses in proximity to the edges of the wear indicator are considerably reduced, and consequently the risks of crack onset are also considerably reduced.

The wear indicator allows an immediate display of the wear state of the sidewall in a manner so as to allow a quick decision regarding the actions to undertake, such as the mounting rotation of the vehicle tyres or the retreading of the tread band also including the sidewall or possible retreading of only the sidewall or the substitution of the tyre.

In the context of the present invention, the following definitions are applied:
- By "circumferential" or "substantially circumferential" direction, it is intended a direction generically aimed according to the rotation direction of the tyre or respectively tilted a value less than or equal to ± 10° with respect to the tyre rotation direction.
- By "radial" or "radially" direction, it is intended a direction generically moving away from the rotation axis of the tyre. By "substantially radial" direction it is intended a direction tilted a value less than or equal to ± 10° with respect to the direction radial.

The present invention, in the aforesaid aspects, can have at least one of the preferred characteristics that are described hereinbelow.

Preferably, the elongated lobe shape can have a maximum extension measured along the first direction comprised between about 4 mm and about 40 mm, more preferably between about 8 and about 35 mm.

Preferably, the elongated lobe shape can have a maximum width measured along a second direction substantially perpendicular to the first direction comprised between about 2 mm and about 30 mm, more preferably between about 4 and about 20 mm.

Preferably, the elongated lobe shape can have a reduced width portion in a direction substantially perpendicular to said first direction, comprised between about 1.5 mm and about 24 mm, more preferably between about 3 mm and about 20 mm.

Preferably the ratio between the reduced width and the maximum width of the lobe shape is equal to or greater than 0.45, more preferably equal to or greater than 0.50 still more preferably equal to or greater than 0.60.

Preferably the ratio between the reduced width and the maximum width of the lobe shape is less than or equal to 0.90, more preferably less than or equal to 0.85 still more preferably less than or equal to 0.80.

Preferably said reduced width portion is arranged in proximity to the centre of the lobe shape.

Preferably said reduced width portion divides the lobe shape into two symmetrically equal parts.

Preferably the lobe shape becomes deeper in the sidewall of the tyre with curved walls having maximum radii of curvature substantially comprised between 40% and 100% of the value of the maximum width of the lobes.

Preferably said lobe shape has a maximum depth comprised between about 1 mm and about 10 mm, more preferably comprised between about 2 mm and about 8 mm.

Preferably said first direction is substantially circumferential and said second direction is substantially radial.

Preferably said second direction is substantially circumferential and said first direction is substantially radial.

Preferably said first direction is tilted an angle comprised between about 10° and about 80° with respect to the circumferential direction.

The sidewall of the tyre has at least one circumferential groove, wherein the at least one circumferential groove intersects the wear indicator.

Advantageously the sidewall of the tyre can have a first and a second circumferential groove.

At least one of said first and/or second circumferential grooves intersects the wear indicator.

In order to confer flexibility to the portion of the sidewall more greatly stressed by the cyclic bending and extending, during the rolling of the tread, without simultaneously generating considerable reductions of the thickness of the sidewall in this critical area, the depth of said at least one circumferential groove can be comprised between about 1 mm and about 7 mm, preferably between 2 mm and 4 mm.

Advantageously, said at least one circumferential groove can have a maximum width comprised between about 0.5 mm and about 5mm.

Preferably, the at least one wear indicator is arranged on the sidewall of the tyre within a radial width range equal to 80 mm comprising the point of maximum chord of said tyre.

Conveniently, the at least one wear indicator can be arranged on the sidewall of the tyre in a radially outer position with respect to the maximum chord point within a radial width range equal to 20 mm. Said wear indicator is in such case arranged between the point of maximum chord of the sidewall and the tread. Advantageously, a tyre sidewall can comprise at most twelve angularly-offset wear indicators.

Preferably the sidewall of the tyre has an annular portion with increased thickness, said at least one wear indicator being made in said sidewall portion with increased thickness.

Conveniently, the sidewall portion with increased thickness can be extended from the point of maximum chord in the direction of the tread band for at least 50 mm, preferably for at least 30 mm and in the direction of the bead of the tyre for at most 50 mm.

According to another aspect, the present invention regards a sidewall for heavy-load vehicle wheels comprising a sidewall portion in which at least one sidewall wear indicator is obtained, in which said sidewall wear indicator comprises at least one lobe shape elongated in a first direction and having a reduced width portion in a direction substantially perpendicular to said first direction.

### Brief description of the drawings

Further characteristics and advantages of the invention are illustrated hereinbelow with reference to embodiments shown as a non-limiting example, in the enclosed figures, in which:
- figure 1 shows an elevation view of a tyre for heavy-load vehicles according to the present invention on which four sidewall wear indicators are present;
- figure 2 shows an enlarged perspective view of a sidewall portion of the tyre of figure 1 in which a portion is seen of one embodiment of a sidewall wear indicator;
- figure 2A shows a perspective view of the sidewall wear indicator of figure 2;
- figure 3 shows a section view of a tyre provided with sidewall wear indicators;
- figures 4A, 4B and 4C show the finite element simulations of the stress states of sidewall wear indicators.

### Detailed description of the invention

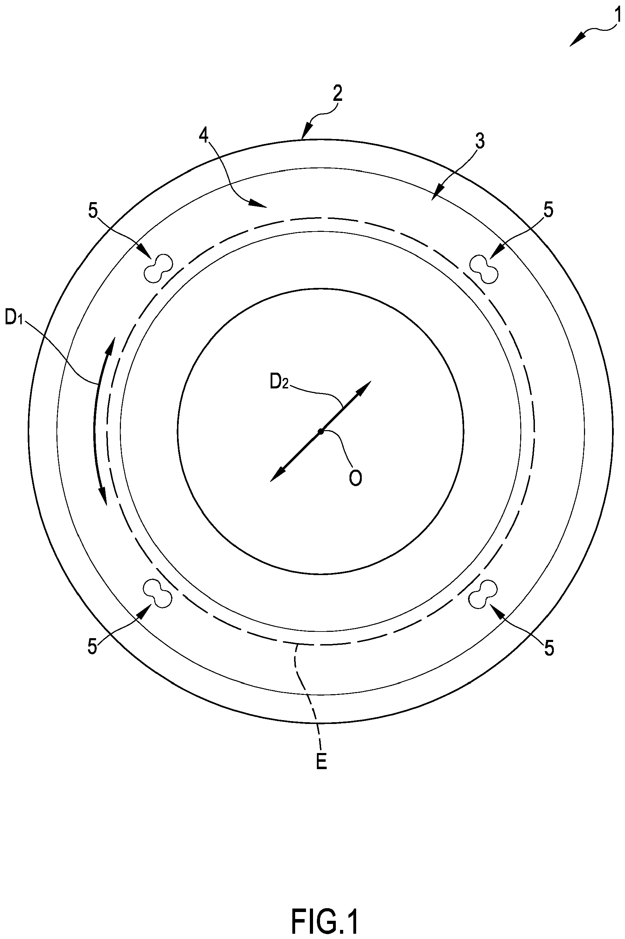

In figure 1, reference number 1 overall indicates a tyre for vehicle wheels, in particular a tyre intended to be mounted on the wheels, traction or steering, of a heavy vehicle.

Hereinbelow in the present description, with the expression "tyre for vehicle wheels for heavy transport", it is intended a tyre destined to be used in a vehicle belonging to the categories M2, M3, N2, N3 and O2-O4, according to the "ECE 25 Consolidated Resolution of the Construction of vehicles (R.E. 3), Annex 7, Classification and definition of power driven vehicles and trailers", or to the categories M3, N2, N3, O3, O4 according to the "ETRTO Engineering design information" (edition 2010), "General Information" section, pages G15 and G16, chapter "International codes for wheeled vehicle classification as UN/ECE 29/78 30 and Directive 2003/37", such as trucks, tractors, buses, vans and other vehicles of this type.

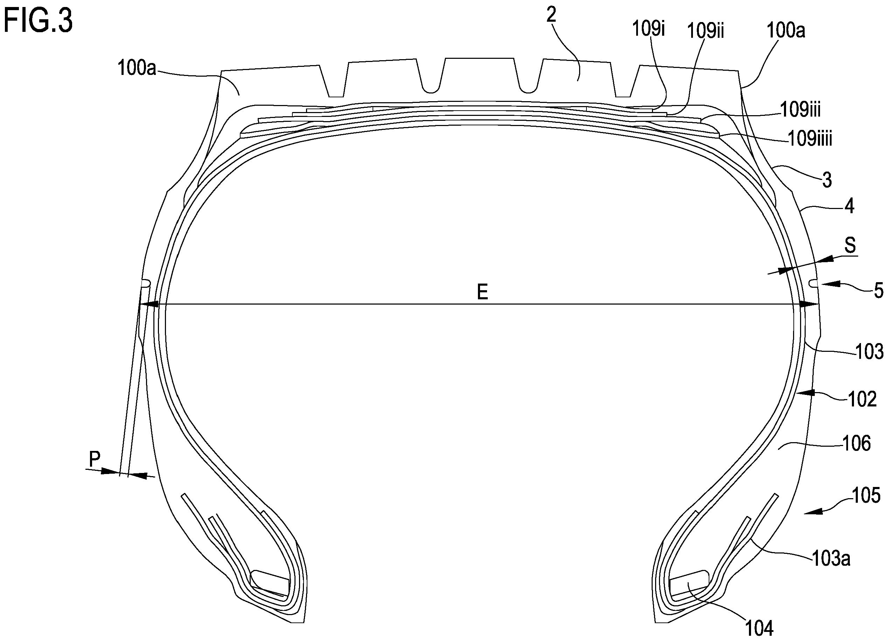

The tyre 1, as better shown in figure 3, comprises a carcass structure 102, including at least one carcass ply 103, preferably two, formed by typically metallic reinforcement cords, incorporated in an elastomeric matrix.

The carcass ply 103 has opposed end flaps 103a engaged with respective bead cores 104. The latter are situated in the zones 105 of the tyre 1 normally identified with the term "beads".

On the outer perimeter edge of the bead cores 104, an elastomeric filler 106 is applied which occupies the space defined between the carcass ply 103 and the respective end flap 103a of the carcass ply 103. The bead cores 104 maintain the tyre 1 firmly fixed to an anchoring seat suitably provided in the wheel rim, thus preventing, during operation, the exit of the bead 105 from such seat.

At the beads 105, specific reinforcement structures can be provided (not illustrated) having the function of improving the transmission of torque to the tyre 1.

In a radially outer position with respect to the carcass structure 102, a belt structure 109 is associated preferably comprising multiple belt layers (in the specific illustrated example, four layers 109i, 109ii, 109iii, 109iiii are shown) situated in radial superimposition with respect to each other and having typically metallic reinforcement cords with crossed orientation and/or substantially parallel to the circumferential extension direction of the tyre 1.

Preferably, the belt structure comprises, in a radially more internal position, a first load-bearing belt layer 109iiii.

In preferred embodiments, said first load-bearing belt layer 109iiii comprises a plurality of reinforcement elements oriented along a first direction that is tilted with respect to said substantially circumferential direction. Preferably, the belt structure 109 comprises, in a radially outer position with respect to said first load-bearing belt layer 109iiii, a second load-bearing belt layer 109iii.

In preferred embodiments, said second load-bearing belt layer 109iii comprises a plurality of reinforcement elements oriented along a second direction which intersects said first direction.

Preferably, the belt structure 109 comprises at least one reinforced belt-like element 109ii arranged in a radially outer position with respect to said second load-bearing belt layer 109iii, preferably at at least one axial end portion of said load-bearing belt layers.

Preferably, said at least one reinforced belt-like element 109ii comprises a plurality of reinforcement elements arranged according to a direction substantially circumferential.

Preferably the belt structure 109 comprises a gravel guard layer 109i arranged in the belt structure in a radially more external position with respect to the other belt layers.

In a radially outer position with respect to the belt structure 109, a tread band 2 is applied that is made of elastomeric material. The tread band is a tread band adapted for heavy-load vehicles for city use, for buses or minibuses, and for such reason will not be further described herein.

Respective sidewalls 3 made of elastomeric material are also applied on the lateral surfaces of the carcass structure 102, each extended from one of the opposed lateral edges 100a of the tread band 2 up to the respective anchoring annular structure 104 to the beads 105.

In figure 1, a sidewall 3 of a tyre is shown that is provided with four sidewall wear indicators 5 according to the present invention; such sidewall 3 is shown for merely exemplifying and descriptive purposes, but it is intended that the sidewall wear indicators 5, according to the present invention, can be obtained in any type of tyre for heavy-load vehicles for city use or for buses or minibuses, without departing from the protective scope of the present invention.

The sidewall 3 has a portion 4 with increased thickness, i.e. a portion in which the thickness S of the sidewall itself is increased, being at least 150% of the thickness of the sidewall outside said portion with increased thickness. The portion with increased thickness 4 is generally made with compounds that are particularly rigid and wear resistant. In this portion with increased thickness 4, the maximum thickness of the sidewall is greater than that of the heavy-load vehicles not used for these applications and is greater than 7mm, preferably greater than 8, e.g. equal to about 9 mm.

The sidewall portion 4 with increased thickness is extended from the point E of maximum chord of the tyre in the direction of the tread band 2 for at least 50 mm, preferably for at least 30 mm, and in the direction of the bead 105 of the tyre for at most 50 mm.

In particular, in the embodiment shown in figures 1-4, the portion with increased thickness 4 is extended from the point E of maximum chord of the tyre in the direction of the tread band 2 for 50 mm and in the direction of the bead of the tyre for 10 mm.

The portion 4 can be extended from the point of maximum chord E in the direction of the tread band 2 up to reaching the respective lateral edge 100a of the tread band 2.

At least one sidewall wear indicator 5 (in the present embodiment, there are four wear indicators), is obtained in the sidewall portion 4.

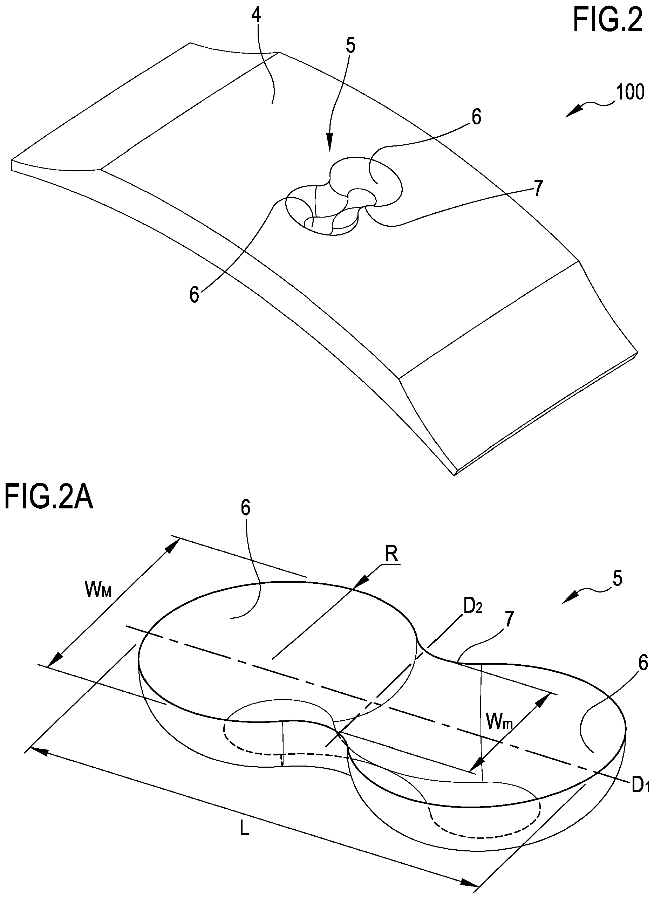

The sidewall wear indicator 5, as is better shown in figures 2 and 2A, comprises at least one lobe shape 6 elongated in a first direction and having a reduced width portion 7 in a direction substantially perpendicular to said first direction.

In the embodiment shown in figure 1, there are four wear indicators 5 obtained in the sidewall of the tyre 1, angularly offset by about 90°.

Also with reference to figures 2 and 2A, the wear indicators have the lobe shape 6 elongated in a first direction D₁ and the reduced width portion 7 arranged according to a second direction D₂ substantially perpendicular to said first direction D₁.

The wear indicators 5 are arranged on at least one sidewall 3 of the tyre 1 within a radial width range equal to 80 mm comprising the point E of maximum chord of the tyre.

Preferably the wear indicators 5 are arranged on the sidewall 3 of the tyre in a radially outer position with respect to the point E of maximum chord.

Preferably the wear indicators 5 are arranged on the sidewall 3 of the tyre in a radially outer position with respect to the point E of maximum chord, within a radial width range equal to 20 mm.

The present selection is determined by the need to monitor the wear of the sidewall of the tyre in zones close to the points of maximum stress of the sidewall 3 of the tyre, typically localized in proximity to the maximum chord.

Preferably, the number of wear indicators 5 varies from three to twelve, still more preferably from four to eight.

The wear indicator 5 according to the embodiment is a lobe shape 6 elongated in a first direction D₁ substantially circumferential and has a reduced width portion 7 according to a second radial direction D₂ moving away from the rotation centre O substantially perpendicular to the first direction D₁.

Wear indicators can be made that are arranged with said first and said second directions reversed with respect to each other or tilted with respect to the circumferential and/or radial direction.

Preferably, the elongated lobe shape can have a maximum extension measured along the first direction D₁ comprised between about 4 mm and about 40 mm, more preferably between about 8 and about 35 mm.

Preferably, the elongated lobe shape can have a maximum width W_{M} measured along a second direction substantially perpendicular to the first direction comprised between about 2 mm and about 30 mm, more preferably between about 4 and about 20 mm.

Preferably, the elongated lobe shape can have a reduced width portion Wₘ in a second direction substantially perpendicular to said first direction, comprised between about 1.5 mm and about 24 mm, more preferably between about 3 mm and about 20 mm.

Preferably the reduction ratio Wₘ/W_{M} between the reduced width and the maximum width of the lobe shape is equal to or greater than 0.45, more preferably equal to or greater than 0.50 still more preferably equal to or greater than 0.60.

Preferably the reduction ratio Wₘ/W_{M} between the reduced width and the maximum width of the lobe shape is less than or equal to 0.90, more preferably less than or equal to 0.85 still more preferably less than or equal to 0.80.

The lobe shape becomes deeper in the sidewall of the tyre with curved walls having maximum radii of curvature R substantially comprised between 40% and 100% of the value of the maximum width of the lobes.

The maximum depth P of the lobe shape is preferably comprised between about 1 mm and about 10 mm, more preferably comprised between about 2 mm and about 8 mm.

In the embodiment shown in the figures, the lateral walls of the lobe shape are also connected to the bottom of the wear indicator itself in a manner so as to further reduce the localized concentration of the stresses.

The sidewall 3 of the tyre has at least one circumferential groove (not illustrated) intersecting the sidewall wear indicator 5.

The tyres for heavy-load vehicles according to the present invention are for example adapted to equip vehicles used in a city environment, typical city buses or goods-transport vehicles, both on directional axles and tractive axles. Such tyres can for example have the following dimensions: 275/70 R 22.5; 295/80 R 22.5; 305/70 R 22.5; 265/75 R19.5; 285/75 R19.5; 215/75 R17.5; 225/75 R17.5.

### Finite element simulations of the tensional state of the sidewall in the zone of the sidewall wear indicator

By way of a comparative test, finite element simulations (FEA) were executed in order to evaluate the distribution of combined bending and twisting stresses, for the purpose of identifying the stress concentrations of the sidewall zone where the wear indicator is present, during the rolling of the tyre and simultaneously with a braking action (acceleration).

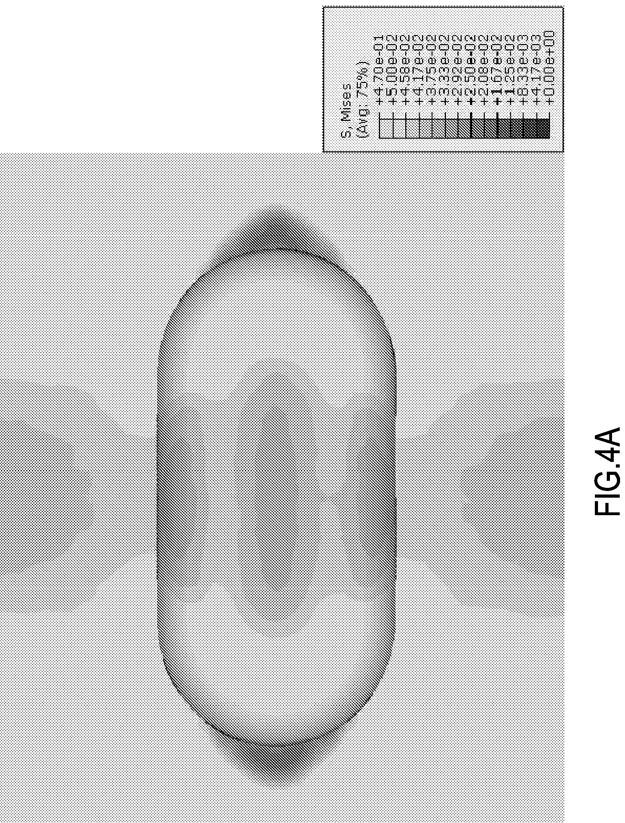

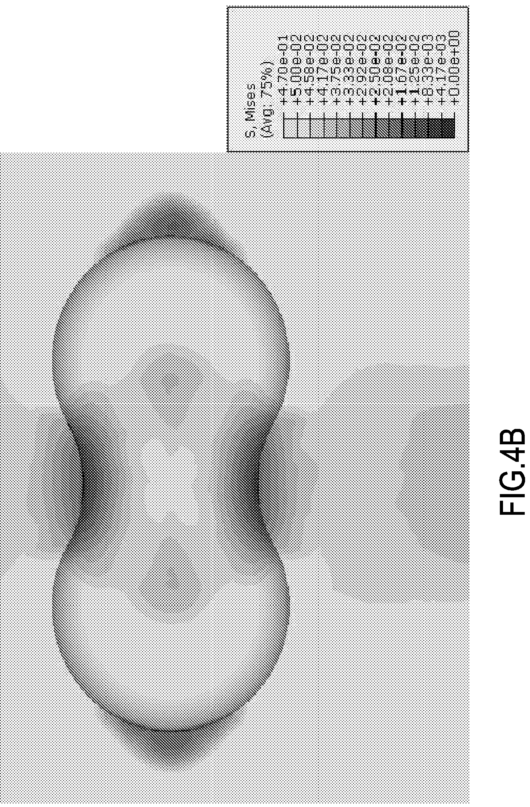

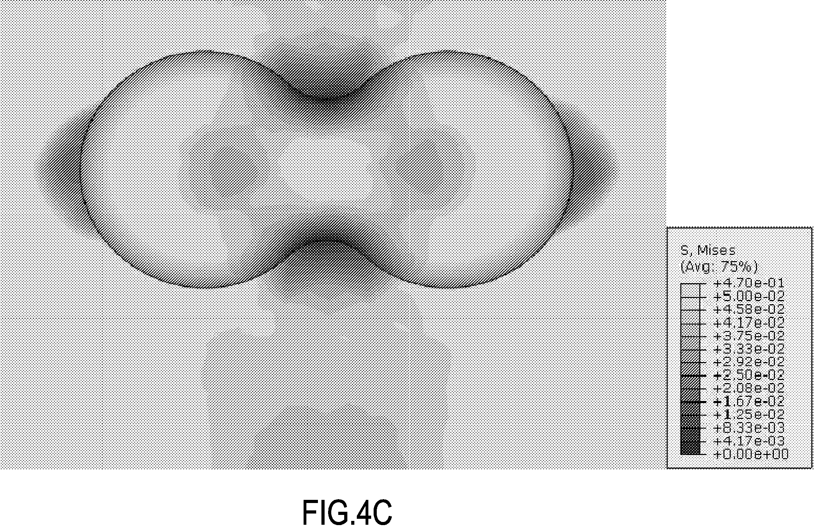

The deformation was simulated of wear indicators with elongated form and lateral walls of constant width (COMP - figure 4A) and of wear indicators as described above having lobe shape elongated in a first direction and having a reduced width portion in a direction substantially perpendicular to said first direction (INV 1 - figure 4B and INV2 - figure 4C).

The test was arranged by simulating the actual stress state of a tyre 295/80 R22.5 in ETRTO nominal conditions (8.5 bar inflation pressure - 3550 kg static vertical load). The values reported in the keys enclosed with the graphs are expressed in MPa.

The wear indicators had the following dimensions:

| | Length (mm) | Max Width W_{M} (mm) | Reduced Width Wₘ(mm) | Ratio (Wₘ/W_{M}) | Max Depth (mm) | End Curvature Radius (mm) |
|---|---|---|---|---|---|---|
| COMP | 32 | 16 | (16) | 1 | 5.5 | 8 |
| INV 1 | 32 | 16 | 12 | 0.75 | 5.5 | 8 |
| INV 2 | 32 | 16 | 9.6 | 0.6 | 5.5 | 8 |

As length L, the extension of the indicator was considered according to the direction of maximum extension (first direction);
As maximum width W_{M}, the maximum width of the indicator was considered (constant width for the indicator COMP).

As reduced width Wₘ, the minimum width evaluated in the reduced width portion was considered (indicator INV 1 and INV 2). In the indicator COMP, such width remains unchanged and corresponds with the maximum width.

The reduction ratio Wₘ/W_{M} between the reduced width and the maximum width of the lobe shape has been calculated as the ratio between the two width measurements according to the second direction of the lobe shape.

As depth, the depth of the bottom of the indicators was considered with respect to the level of the outer sidewall.

In figures 4A, 4B and 4C, gray shades indicate the intensities of the combined stresses (MPa) simulated in the various zones of the surface of the sidewall where the indicators are present, such intensities decreasing from the lightest to the darkest gray tone.

The keys reported in figures 4A, 4B and 4C indicate the stress values expressed in MPa, which are attributed with the gray shades (decreasing stress values corresponding to gray tones respectively from light to dark).

It can be seen that the edge of the lobe-shaped indicators has a stress concentration that is lower in the zone outside the edge of the reduced width portion, indicated with B in the figures (darker tones), with respect to the concentration of stresses present in the corresponding zone of the indicator having linear walls (lighter tones). Such difference indicates lower probability of formation and propagation of cracks in the zone considered critical, and also confirms the preference of this form of wear indicator.

In figure 4C, the result was reported of a simulation on a sample (INV 2) bearing a wear indicator as described above, having lobe shape elongated in a first direction and having a reduced width portion in a direction substantially perpendicular to said first direction.

As illustrated in figure 4C, in the simulated case, the lobe shape had a lower reduction ratio (Wₘ/W_{M} = 0.6) and hence a greater reduction of the width in the central portion.

As seen in the graphic correlation between the gray tones and the corresponding stress states, in the zone B with reduced width beyond the edge of the indicator, also in the present case a limited stress value is manifested - a confirmation that also the wear indicator INV 2 does not appear to facilitate the formation of cracks in the aforesaid zone.

The present invention has been described with reference to several embodiments. Different modifications can be made to the embodiments described in detail, still remaining within the protective scope of the invention, defined by the following claims.

## Claims

1. Tyre (1) for heavy-load vehicle wheels comprising a tread band (2) and two sidewalls (3) opposed with respect to said tread band (2); at least one of said sidewalls (3) comprising a sidewall portion (4) in which at least one sidewall wear indicator (5) is obtained comprising at least one lobe shape (6) elongated in a first direction (D₁), wherein said sidewall wear indicator (5) comprises a reduced width portion (7) in a second direction (D₂) substantially perpendicular to said first direction (D₁); **characterised in that** the sidewall (3) of the tyre has at least one circumferential groove; wherein said at least one circumferential groove intersects the wear indicator (5).

2. Tyre (1) according to claim 1, wherein said elongated lobe shape (6) has a maximum extension measured along said first direction (D₁) comprised between about 4 mm and about 40 mm.

3. Tyre (1) according to claim 1 or 2, wherein said elongated lobe shape (6) has a maximum width W_{M} measured along said second direction (D₂) substantially perpendicular to the first direction (D₁) comprised between about 2 mm and about 30 mm.

4. Tyre (1) according to any one of claims 1 to 3, wherein said elongated lobe shape (6) has a reduced width Wₘ portion in a direction substantially perpendicular to said first direction, comprised between about 1.5 mm and about 24 mm.

5. Tyre (1) according to any one of claims 1 to 4, wherein the ratio between the reduced width and the maximum width of the lobe shape Wₘ/W_{M} is equal to or greater than 0.45

6. Tyre (1) according to any one of claims 1 to 5, wherein the ratio between the reduced width and the maximum width of the lobe shape Wₘ/W_{M} is less than or equal to 0.90

7. Tyre (1) according to any one of claims 1 to 6, wherein said reduced width portion (7) is arranged in proximity to the centre of the lobe shape.

8. Tyre (1) according to any one of claims 1 to 7, wherein said lobe shape (6) becomes deeper in the sidewall (3) of the tyre (1) with curved walls having maximum radii of curvature R substantially comprised between 40% and 100% of the value of the maximum width W_{M} of the lobes.

9. Tyre (1) according to any one of claims 1 to 8, wherein said lobe shape has a maximum depth P comprised between about 1 mm and about 10 mm.

10. Tyre (1) according to any one of claims 1 to 9, wherein said at least one wear indicator (5) is arranged on the sidewall (3) of the tyre in a radially outer position with respect to the point of maximum chord within a radial width range equal to 20 mm.

11. Tyre (1) according to any one of claims 1 to 10, **characterised in that** said sidewall portion (4) is of increased thickness and is extended from the point of maximum chord in the direction of the tread band for at least 50 mm and in the direction of the tyre bead for at most 50mm.

12. Tyre (1) according to any one of claims 1 to 11, wherein said first direction (D₁) is substantially circumferential and said second direction (D₂) is substantially radial.

13. Tyre (1) according to any one of claims 1 to 11, wherein said second direction (D₂) is substantially circumferential and said first direction (D₁) is substantially radial.

14. Tyre (1) according to any one of claims 1 to 13, wherein the sidewall (2) of the tyre has a first and a second circumferential groove.

15. Tyre (1) according to any one of claims 1 to 14, wherein said at least one circumferential groove has a maximum width comprised between about 0.5 mm and about 5 mm.

## Patentansprüche

1. Reifen (1) für Räder von Schwerlastfahrzeugen, umfassend einen Laufflächenring (2) und zwei Seitenwände (3), die einander in Bezug auf den Laufflächenring (2) gegenüberliegen; wobei zumindest eine der Seitenwände (3) einen Seitenwandabschnitt (4) umfasst, in welchem zumindest ein Seitenwand-Verschleißanzeiger (5) erhalten wird, umfassend zumindest eine in einer ersten Richtung (D₁) längliche Hantelform, wobei der Seitenwand-Verschleißanzeiger (5) einen Abschnitt (7) mit verringerter Breite in einer zweiten Richtung (D₂) aufweist, die im Wesentlichen senkrecht auf die erste Richtung (D₁) steht;
**dadurch gekennzeichnet, dass** die Seitenwand (3) des Reifens zumindest eine umlaufende Nut aufweist; wobei die zumindest eine umlaufende Nut den Verschleißanzeiger (5) schneidet.

2. Reifen (1) nach Anspruch 1, wobei die längliche Hantelform (6) eine entlang der ersten Richtung (D₁) gemessene maximale Erstreckung zwischen etwa 4 mm und etwa 40 mm aufweist.

3. Reifen (1) nach Anspruch 1 oder 2, wobei die längliche Hantelform (6) eine entlang der zweiten Richtung (D₂), die im Wesentlichen senkrecht auf die erste Richtung (D₁) steht, gemessene maximale Breite W_{M} zwischen etwa 2 mm und etwa 30 mm aufweist.

4. Reifen (1) nach einem der Ansprüche 1 bis 3, wobei die längliche Hantelform (6) in einer Richtung im Wesentlichen senkrecht auf die erste Richtung einen Abschnitt mit verringerter Breite Wₘ zwischen etwa 1,5 mm und etwa 24 mm aufweist.

5. Reifen (1) nach einem der Ansprüche 1 bis 4, wobei das Verhältnis Wₘ/W_{M} zwischen der verringerten Breite und der maximalen Breite der Hantelform gleich oder größer als 0,45 ist.

6. Reifen (1) nach einem der Ansprüche 1 bis 5, wobei das Verhältnis Wₘ/W_{M} zwischen der verringerten Breite und der maximalen Breite der Hantelform kleiner als oder gleich 0,90 ist.

7. Reifen (1) nach einem der Ansprüche 1 bis 6, wobei der Abschnitt mit verringerter Breite (7) in unmittelbarer Nähe zum Zentrum der Hantelform angeordnet ist.

8. Reifen (1) nach einem der Ansprüche 1 bis 7, wobei die Hantelform (6) in der Seitenwand (3) des Reifens (1) tiefer wird, mit gekrümmten Wänden, die maximale Krümmungsradien R im Wesentlichen zwischen 40 % und 100 % des Werts der maximalen Breite W_{M} der Lappen aufweisen.

9. Reifen (1) nach einem der Ansprüche 1 bis 8, wobei die Hantelform eine maximale Tiefe P zwischen etwa 1 mm und etwa 10 mm aufweist.

10. Reifen (1) nach einem der Ansprüche 1 bis 9, wobei der zumindest eine Verschleißanzeiger (5) an der Seitenwand (3) des Reifens in einer radial äußeren Position in Bezug auf den Punkt der maximalen Breite innerhalb eines radialen Breitenbereichs gleich 20 mm angeordnet ist.

11. Reifen (1) nach einem der Ansprüche 1 bis 10, **dadurch gekennzeichnet, dass** der Seitenwandabschnitt (4) eine vergrößerte Dicke aufweist und sich von dem Punkt der maximalen Breite in der Richtung des Laufflächenrings über zumindest 50 mm und in der Richtung des Reifenwulstes über höchstens 50 mm erstreckt.

12. Reifen (1) nach einem der Ansprüche 1 bis 11, wobei die erste Richtung (D₁) im Wesentlichen die Umfangsrichtung ist und die zweite Richtung (D₂) im Wesentlichen radial.

13. Reifen (1) nach einem der Ansprüche 1 bis 11, wobei die zweite Richtung (D₂) im Wesentlichen die Umfangsrichtung ist und die zweite Richtung (D₁) im Wesentlichen radial.

14. Reifen (1) nach einem der Ansprüche 1 bis 13, wobei die Seitenwand (2) des Reifens eine erste und eine zweite umlaufende Nut aufweist.

15. Reifen (1) nach einem der Ansprüche 1 bis 14, wobei die zumindest eine umlaufende Nut eine maximale Breite zwischen etwa 0,5 mm und etwa 5 mm aufweist.

## Revendications

1. Pneu (1) pour roues de véhicule poids lourd comprenant une bande de roulement (2) et deux flancs (3) opposés par rapport à ladite bande de roulement (2) ; au moins l'un desdits flancs (3) comprenant une partie de flanc (4) dans laquelle est obtenu au moins un indicateur d'usure de flanc (5) comprenant au moins une forme de lobe (6) allongée dans une première direction (D₁), dans lequel ledit indicateur d'usure de flanc (5) comprend une partie de largeur réduite (7) dans une deuxième direction (D₂) sensiblement perpendiculaire à ladite première direction (D₁) ;
**caractérisé en ce que** le flanc (3) du pneu a au moins une rainure circonférentielle ; dans lequel ladite au moins une rainure circonférentielle coupe l'indicateur d'usure (5) .

2. Pneu (1) selon la revendication 1, dans lequel ladite forme de lobe allongée (6) a une extension maximale mesurée le long de ladite première direction (D₁) comprise entre environ 4 mm et environ 40 mm.

3. Pneu (1) selon la revendication 1 ou 2, dans lequel ladite forme de lobe allongée (6) a une largeur maximale W_{M} mesurée le long de ladite deuxième direction (D₂) sensiblement perpendiculaire à la première direction (D₁) comprise entre environ 2 mm et environ 30 mm.

4. Pneu (1) selon l'une quelconque des revendications 1 à 3, dans lequel ladite forme de lobe allongée (6) a une partie de largeur réduite Wₘ dans une direction sensiblement perpendiculaire à ladite première direction, comprise entre environ 1,5 mm et environ 24 mm.

5. Pneu (1) selon l'une quelconque des revendications 1 à 4, dans lequel le rapport entre la largeur réduite et la largeur maximale de la forme de lobe Wₘ/W_{M} est supérieur ou égal à 0,45.

6. Pneu (1) selon l'une quelconque des revendications 1 à 5, dans lequel le rapport entre la largeur réduite et la largeur maximale de la forme de lobe Wₘ/W_{M} est inférieur ou égal à 0,90.

7. Pneu (1) selon l'une quelconque des revendications 1 à 6, dans lequel ladite partie de largeur réduite (7) est agencée à proximité du centre de la forme de lobe.

8. Pneu (1) selon l'une quelconque des revendications 1 à 7, dans lequel ladite forme de lobe (6) devient plus profonde dans le flanc (3) du pneu (1) avec des parois incurvées ayant des rayons de courbure maximaux R sensiblement compris entre 40% et 100% de la valeur de la largeur maximale W_{M} des lobes.

9. Pneu (1) selon l'une quelconque des revendications 1 à 8, dans lequel ladite forme de lobe a une profondeur maximale P comprise entre environ 1 mm et environ 10 mm.

10. Pneu (1) selon l'une quelconque des revendications 1 à 9, dans lequel ledit au moins un indicateur d'usure (5) est agencé sur le flanc (3) du pneu dans une position radialement extérieure par rapport au point de câble maximal dans une plage de largeur radiale égale à 20 mm.

11. Pneu (1) selon l'une quelconque des revendications 1 à 10, **caractérisé en ce que** ladite partie de flanc (4) a une épaisseur accrue et s'étend à partir du point de câble maximal dans la direction de la bande de roulement sur au moins 50 mm et dans la direction du talon de pneu pour au plus 50 mm.

12. Pneu (1) selon l'une quelconque des revendications 1 à 11, dans lequel ladite première direction (D₁) est sensiblement circonférentielle et ladite deuxième direction (D₂) est sensiblement radiale.

13. Pneu (1) selon l'une quelconque des revendications 1 à 11, dans lequel ladite deuxième direction (D₂) est sensiblement circonférentielle et ladite première direction (D₁) est sensiblement radiale.

14. Pneu (1) selon l'une quelconque des revendications 1 à 13, dans lequel le flanc (2) du pneu a des première et deuxième rainures circonférentielles.

15. Pneu (1) selon l'une quelconque des revendications 1 à 14, dans lequel ladite au moins une rainure circonférentielle a une largeur maximale comprise entre environ 0,5 mm et environ 5 mm.
